# EUROPÄISCHE PATENTSCHRIFT

(11) **EP 3 350 446 B1**
(45) Veröffentlichungstag und Bekanntmachung des Hinweises auf die Patenterteilung: **30.10.2019**
(21) Anmeldenummer: 16765992.9
(22) Anmeldetag: 15.09.2016
(51) Int. Cl.: F04C 2/18, F04C 2/344, F04C 15/06, G01F 3/10, G01F 15/02

(54) **SPÜLBARE VORRICHTUNG ZUR MESSUNG VON DURCHFLUSSVORGÄNGEN VON FLUIDEN**
FLUSHABLE DEVICE FOR MEASURING FLOW PROCESSES OF FLUIDS
DISPOSITIF POUVANT ÊTRE PURGÉ SERVANT À MESURER DES PROCESSUS D'ÉCOULEMENT DE FLUIDES

(30) Priorität: 15.09.2015 AT 6012015
(43) Veröffentlichungstag der Anmeldung: 25.07.2018
(73) Patentinhaber: AVL List GmbH, 8020 Graz (AT)
(72) Erfinder: DERSCHMIDT, Otfried, 8020 Graz (AT)
(74) Vertreter: Patentanwälte ter Smitten Eberlein-Van Hoof Rütten Partnerschaftsgesellschaft mbB
(86) Internationale Anmeldenummer: PCT/EP2016/071766
(87) Internationale Veröffentlichungsnummer: WO 2017/046206

(56) Entgegenhaltungen:
- WO-A1-2014/118045
- WO-A1-2014/206767
- US-A- 2 845 031
- US-A- 3 273 502

## Beschreibung

Die Erfindung betrifft eine Vorrichtung zur Messung von Durchflussvorgängen von Fluiden mit einem Einlass, einem Auslass, einem über eine Antriebseinheit antreibbaren Verdrängerzähler, dessen Verdrängerkammer über einen Zulaufkanal mit dem Einlass und über einen Ablaufkanal mit dem Auslass fluidisch verbunden ist, einer Umgehungsleitung, über die der Verdrängerzähler umgehbar ist, einem Druckdifferenzaufnehmer, der in der Umgehungsleitung angeordnet ist und einer Auswerte- und Steuereinheit, über die der antreibbare Verdrängerzähler in Abhängigkeit der am Druckdifferenzaufnehmer anliegenden Druckdifferenz regelbar ist.

Derartige Vorrichtungen sind seit vielen Jahren bekannt und werden beispielsweise zur Einspritzmengenmessung bei Verbrennungsmotoren verwendet.

Die ursprüngliche Version einer derartigen Vorrichtung zur Durchflussmessung wurde in der DE-AS 1 798 080 beschrieben. Dieses elektronisch gesteuerte Durchflussmessgerät weist eine Hauptleitung mit einem Einlass und einem Auslass auf, in der ein rotatorischer Verdrängerzähler in Form einer Zahnradpumpe angeordnet ist. Parallel zur Hauptleitung verläuft eine Umgehungsleitung, über die der rotatorische Verdrängerzähler umgehbar ist und in der ein als Druckdifferenzaufnehmer dienender Kolben in einer Messkammer angeordnet ist. Zur Bestimmung der Durchflussmenge wird die Auslenkung des Kolbens in der Messkammer mittels eines optischen Sensors gemessen. Die Drehzahl der Zahnradpumpe wird aufgrund dieses Signals über eine Auswerte- und Steuereinheit stetig nachgeregelt und zwar derart, dass der Kolben möglichst immer in seine Ausgangsposition zurückgeführt wird, so dass in der Umgehungsleitung lediglich kleine Strömungen entstehen. Aus der über einen Kodierer gemessenen Anzahl der Umdrehungen oder Teilumdrehungen der Zahnradpumpe sowie dem bekannten Fördervolumen der Zahnradpumpe bei einer Umdrehung wird so der Durchfluss innerhalb eines vorgegebenen Zeitintervalls berechnet.

Ein derartig aufgebautes Durchflussmengenmessgerät wird auch in der DE 103 31 228 B3 offenbart. Zur Bestimmung der genauen Einspritzmengenverläufe wird die Zahnradpumpe vor Beginn jeder Einspritzung jeweils auf eine konstante Drehzahl eingestellt, so dass anschließend die Bewegung des Kolbens gemessen wird und diese Auslenkung zur Bestimmung der Einspritzverläufe genutzt wird. In der Messkammer sind zusätzlich ein Drucksensor sowie ein Temperatursensor angeordnet, deren Messwerte zur Berechnung und Korrektur der Einspritzmengenverläufe ebenfalls der Recheneinheit zugeführt werden.

Zur Erhöhung der Messgenauigkeit ist es insbesondere bei Inbetriebnahme des Gerätes erforderlich, dieses von Lufteinschlüssen zu befreien, die beim Messvorgang aufgrund der Kompressibilität der Luft zu deutlichen Messfehlern führen.

Entsprechend wird in der WO 2014/118045 A1 ein Durchflussmessgerät vorgeschlagen, bei dem am die Messkammer des Druckdifferenzaufnehmers begrenzenden Gehäuse ein Bypasskanal ausgebildet ist, über den eine Verbindung der Kolbenvorderseite zur Kolbenrückseite hergestellt wird, wenn der Kolben gegen einen axialen Anschlag am ablaufseitigen Ende der Messkammer anliegt. Auf diese Weise können Lufteinschlüsse zur ablaufseitigen Fläche des Kolbens gelangen, so dass bei Förderung durch den Verdrängerzähler die Luft in Richtung des Auslasses transportiert wird. In diesem Bypasskanal ist zusätzlich eine Rückschlagklappe angeordnet, die eine Strömung von der Ablaufseite zur Zulaufseite, also in umgekehrter Richtung verhindert, um bei Inbetriebnahme nach erfolgter Spülung den Kolben einfach wieder zurück in seine Mittelstellung bewegen zu können.

Es hat sich jedoch gezeigt, dass vorhandene Lufteinschlüsse durch diese Maßnahme nicht vollständig aus dem Durchflussmessgerät abgeführt werden können, sondern sich in verschiedenen Toträumen des Gerätes ansammeln und sich irgendwann dort lösen, was im Folgenden zu Messfehlern führt. Insbesondere bei Messgeräten, die bei hohen Drücken arbeiten und deren Verdrängerzähler über einen Elektromotor mit zwischengeschalteter Magnetkupplung angetrieben wird, ergeben sich Probleme durch Lufteinschlüsse in der Magnetkupplung.

Es stellt sich daher die Aufgabe, eine Vorrichtung zur Messung von Durchflussvorgängen von Fluiden zur Verfügung zu stellen, mit der die Messergebnisse verbessert werden, indem Lufteinschlüsse bei der Inbetriebnahme möglichst vollständig aus dem Gerät entfernt werden. Hierzu sollen möglichst keine zusätzlichen Bauteile verwendet oder angeschlossen werden müssen. Eine entsprechende Spülung soll ohne den Anschluss zusätzlicher Spülleitungen von außen erfolgen. Zusätzlich soll eine Notableitung von Flüssigkeit möglich sein, wenn beispielsweise die Zahnräder des Zahnradzählers blockieren.

Diese Aufgabe wird durch eine Vorrichtung zur Messung von Durchflussvorgängen eines Fluides mit den Merkmalen des Anspruchs 1 gelöst.

Dadurch, dass der Zulaufkanal und der Ablaufkanal in Strömungsrichtung des Fluids steigend ausgebildet sind, wird in den Kanälen oder im Verdrängerzähler vorhandene Luft zuverlässig abgeführt. Toträume, in denen sich Luft sammelt werden vermieden. Stattdessen steigt die Luft aus dem Zulaufkanal automatisch in die Förderkammer, wird mit dem Messfluid zur Auslassöffnung gefördert und steigt erneut durch seine geringere Dichte entlang des Ablaufkanals in Richtung des Auslasses. Entsprechend werden bei Inbetriebnahme Lufteinschlüsse, welche die Messergebnisse verschlechtern zuverlässig entfernt.

Zur weiteren Verbesserung der Messergebnisse ist am Druckdifferenzaufnehmer ein Bypasskanal ausgebildet, der sich vom Innern einer Messkammer des Druckdifferenzaufnehmers in eine Spülleitung erstreckt, die in einer Rotorkammer der Antriebseinheit mündet. Durch diese Maßnahme kann an der Kolbenvorderseite anstehende Luft über den Bypasskanal und die Spülleitung in Richtung der Rotorkammer der Antriebseinheit abgeführt werden.

Ergänzend hierzu ist vorzugsweise an der Rotorkammer im geodätisch unteren Bereich eine Zuflussöffnung ausgebildet ist, in die die Spülleitung mündet und im geodätisch oberen Bereich eine Abflussöffnung ausgebildet, die fluidisch mit dem Auslass verbunden ist. Somit wird beim Spülvorgang die gesamte Luft, die sich in der Messkammer oder in der Rotorkammer befindet, vollständig zum Auslass gefördert und entsprechend vollständig aus der Vorrichtung entfernt.

In einer hierzu weiterführenden Ausführungsform ist im Innern der Messkammer ein Kolben axial verschieblich angeordnet, über den eine Bypassöffnung aus der Messkammer zum Bypasskanal verschließbar oder freigebbar ist, wobei die Bypassöffnung durch den Kolben freigegeben und damit eine fluidische Verbindung zwischen einer Zulauföffnung in die Messkammer und dem Bypasskanal hergestellt ist, wenn der Kolben abströmseitig an einem die Kolbenbewegung axial begrenzenden Anschlag anliegt. Somit wird bei Stillstand des Verdrängerzählers Flüssigkeit zur Spülung in das System eingeführt, wodurch sich der Kolben so weit verschiebt, dass die Bypassöffnung freigegeben wird und in der Messkammer vorhandene Luft in Richtung der Rotorkammer abgeführt wird.

In einer weiterführenden vorteilhaften Ausbildung ist die Messkammer durch einen Hohlzylinder begrenzt, an dessen gegenüberliegenden axialen Enden der radial begrenzenden Mantelfläche die Zulauföffnung und eine Ablauföffnung ausgebildet sind, die an den entgegengesetzten Enden des Druckdifferenzaufnehmers in die Umgehungsleitung münden, wobei an der Mantelfläche die Bypassöffnung ausgebildet ist und in dem Bypasskanal ein Rückschlagventil angeordnet ist. Entsprechend wird durch die Bewegung des Kolbens die Bypassöffnung freigegeben. Das Rückschlagventil verhindert eine Strömung des Fluids und der Luft in umgekehrter Richtung, so dass die Luft über den Bypasskanal immer nur in Richtung der Rotorkammer strömen kann. Die Aufgabe des zumeist als Klappe ausgebildeten Rückschlagventils ist es, das Lösen des Kolbens aus seiner Endstellung nach dem Spülvorgang zu erleichtern.

Dabei erstreckt sich vorteilhafterweise die Spülleitung vom Bypasskanal durch ein Kolbengehäuse, in dem der Druckdifferenzaufnehmer angeordnet ist und durch ein Verdrängergehäuse, in dem der Verdrängerzähler angeordnet ist, zu einer Zuflussöffnung der Rotorkammer. Somit müssen zur Entlüftung keine zusätzlichen Leitungen vorgesehen oder montiert werden.

Eine besonders einfache Herstellung der Leitungsabschnitte im Verdrängergehäuse wird geschaffen, indem die Verdrängerkammer in einer Buchse ausgebildet ist, die in einer Aufnahmeöffnung des Verdrängergehäuses angeordnet ist, wobei sich der Spülleitungsabschnitt, der sich durch das Verdrängergehäuse erstreckt, durch eine Bohrung in der Buchse gebildet ist.

Vorzugsweise zweigt die Spülleitung stromabwärts des Rückschlagventils vom Bypasskanal ab, wodurch auch ein Rückströmen von Luft aus der Spülleitung verhindert wird.

Ergänzend erstreckt sich die Spülleitung von der Abflussöffnung durch das Verdrängergehäuse und das Kolbengehäuse zum Auslass, so dass auch diese Leitungsabschnitte nicht als gesonderte Leitungen vorgesehen werden müssen, sondern eine fluidische Verbindung beim Zusammenbau der Gehäuseteile ohne zusätzliche Montageschritte entsteht.

Vorteilhafterweise ist die Bypassöffnung in einer ersten Betriebsstellung der Vorrichtung an einem geodätisch höchsten Punkt der Messkammer ausgebildet, wodurch sichergestellt wird, dass Lufteinschlüsse zur Bypassöffnung gelangen und abgeführt werden können.

In einer bevorzugten Ausführungsform ist der erste Bypasskanal ausschließlich über die Rotorkammer fluidisch mit der Ablauföffnung der Messkammer verbunden. So wird eine Durchströmung der Spülleitung unabhängig von den bestehenden Druckverhältnissen sichergestellt und dennoch die Funktion des Bypasskanals, also das mögliche Abführen von Fluidströmen beispielsweise bei Blockieren des Verdrängerzählers aufrecht erhalten.

Eine besonders einfache Abdichtung und Montage ergibt sich, wenn die Rotorkammer radial durch einen Spalttopf begrenzt ist, der dann beispielsweise über Schrauben am Verdrängergehäuse befestigt werden kann.

In einer hierzu weiterführenden vorteilhaften Ausbildung trennt der Spalttopf einen innenliegenden Rotor von einem außenliegenden Stator eines Spalttopfmotors. Zusätzliche Kupplungen werden bei einer derartigen Ausführung nicht mehr benötigt. Stattdessen kann ein direkter Antrieb des Verdrängerrades über den Spalttopfmotor ausgeführt werden, wodurch auftretende Kosten durch Montage und zusätzliche Bauteile deutlich verringert werden.

In einer hierzu alternativen Ausbildung der Erfindung trennt der Spalttopf einen innenliegenden Rotor von einem außenliegenden magnetischen Rotor einer Magnetkupplung. Bei dieser Ausführung kann ein Standard-Elektromotor zum Antrieb verwendet werden, der keinen Kontakt zum Fluid aufweist und somit einfach austauschbar ist.

Vorzugsweise ist an der Messkammer eine zum Einlass und Auslass weisende zweite Bypassöffnung ausgebildet, die in einen zweiten Bypasskanal mündet, der ablaufseitig in die Messkammer mündet. Mit diesem Bypasskanal wird eine Entlüftung der Messkammer in einer zweiten Einbaulage sichergestellt, in der der Einlass und der Auslass nach oben gerichtet sind.

Hierzu ist ablaufseitig an der Messkammer ein Bypassablaufkanal ausgebildet, der sich aus der Messkammer in den Ablaufkanal erstreckt, so dass die bei Spülung geförderte Luft oder die bei Blockieren des Verdrängerzählers vorhandene Flüssigkeit zum Auslass abgeführt werden kann.

Vorzugsweise ist die zweite Bypassöffnung kleiner als die erste Bypassöffnung. Auf diese Weise wird sichergestellt, dass zusätzlich eine Durchströmung der Rotorkammer erfolgt, so dass diese auch in der zweiten Einbaulage zuverlässig entlüftet werden kann.

Zusätzlich zweigt vorteilhafterweise vom ersten Bypasskanal eine Notlaufleitung ab, die entweder direkt oder über einen Ablauf der Umgehungsleitung in den Ablaufkanal mündet. Diese dient zur zusätzlichen Abführung von Flüssigkeit bei plötzlichen hohen Druckanstiegen beispielsweise durch ein Verklemmen der Zahnräder des Verdrängerzählers und verhindert Schäden in der Vorrichtung.

Vorzugsweise ist in der Notlaufleitung ein Druckbegrenzungsventil angeordnet, so dass diese Notlaufleitung nur öffnet, wenn ein definierter zu hoher Druck im Gerät vorhanden ist.

Diese Notlaufleitung zweigt vorzugsweise stromabwärts der Spülleitung vom ersten Bypasskanal ab, so dass die Notlaufleitung bei geringeren Drücken nicht mit Flüssigkeit aus dem Gerät beaufschlagt wird.

Es wird somit eine Vorrichtung zur Messung von Durchflussvorgängen von Fluiden zur Verfügung gestellt, mit dem eine rasche und vollständige Entlüftung bei der Inbetriebnahme in zwei Einbaulagen sichergestellt wird. Dabei werden alle durchströmten Teile der Vorrichtung entlüftet, einschließlich der Rotorkammer. Zusätzlich werden Schäden am Gerät bei plötzlichen Druckspitzen zuverlässig vermieden. Entsprechend können mit dieser Vorrichtung Messergebnisse erzielt werden, die über die gesamte Lebensdauer sehr exakt sind, so dass über einen langen Zeitraum auch zeitlich aufgelöste Durchflussvorgänge hochgenau gemessen werden können. Dabei ist die Vorrichtung einfach herstellbar und montierbar, so dass trotz der zusätzlichen Funktionen keine signifikanten zusätzlichen Kosten anfallen.

Eine erfindungsgemäße Vorrichtung zur Messung von Durchflussvorgängen von Fluiden wird im Folgenden anhand eines in den Figuren dargestellten, nicht einschränkenden Ausführungsbeispiels beschrieben.
Figur 1 zeigt eine perspektivische Außenansicht der erfindungsgemäßen Vorrichtung.
Figur 2 zeigt eine perspektivische Ansicht des Kolbengehäuses der erfindungsgemäßen Vorrichtung aus Figur 1 in geschnittener Darstellung und mit gestrichelt dargestellten im Innern ausgebildeten Kanälen.
Figur 3 zeigt eine Schnittansicht des Kolbengehäuses gemäß Figur 2 im Bereich des Auslasses.
Figur 4 zeigt eine teilweise geschnittene Darstellung durch die Messkammer des Druckdifferenzaufnehmers und mit Ansicht auf das Verdrängergehäuse.
Figur 5 zeigt eine perspektivische Außenansicht der Messkammer.
Figur 6 zeigt eine perspektivische Ansicht des Verdrängergehäuses mit noch nicht montierter Buchse und Zahnrädern.
Figur 7 zeigt einen Spalttopf einer mit dem Verdrängergehäuse verbindbaren Antriebseinheit.
Figur 8 zeigt in geschnittener Darstellung die am Verdrängergehäuse befestigte Antriebseinheit.

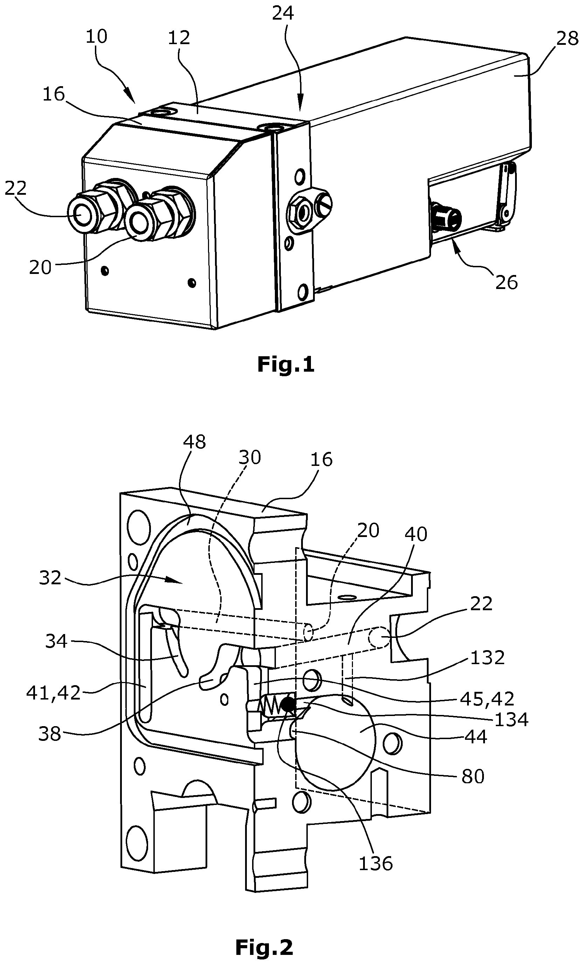

In der Figur 1 ist eine Außenansicht einer erfindungsgemäßen Vorrichtung zur Messung von zeitlich aufgelösten Durchflussvorgängen dargestellt. Die erfindungsgemäße Vorrichtung weist ein Gehäuse 10 auf, welches zweiteilig hergestellt ist, wobei im als Verdrängergehäuse 12 dienenden ersten Gehäuseteil ein Verdrängerzähler 14 angeordnet ist und im als Kolbengehäuse 16 dienenden zweiten Gehäuseteil ein Druckdifferenzaufnehmer 18 angeordnet ist. Zusätzlich sind am Kolbengehäuse 16 ein Einlass 20 und ein Auslass 22 ausgebildet. Eine Antriebseinheit 24 des Verdrängerzählers 14 sowie die Auswerte- und Steuereinheit 26 sind innerhalb einer Haube 28 angeordnet, die ebenso wie das Kolbengehäuse 16 am Verdrängergehäuse 12 befestigt ist.

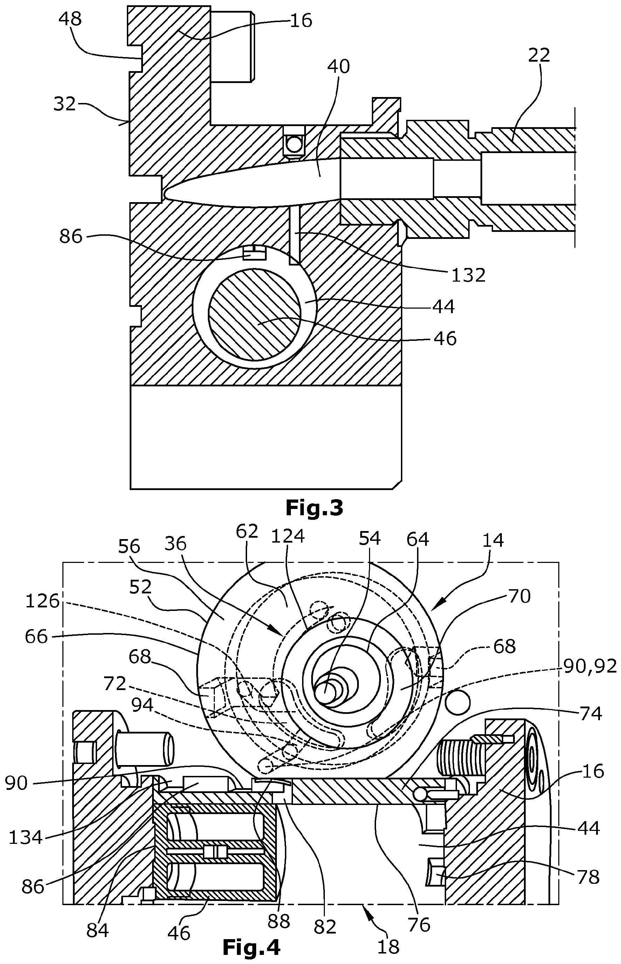

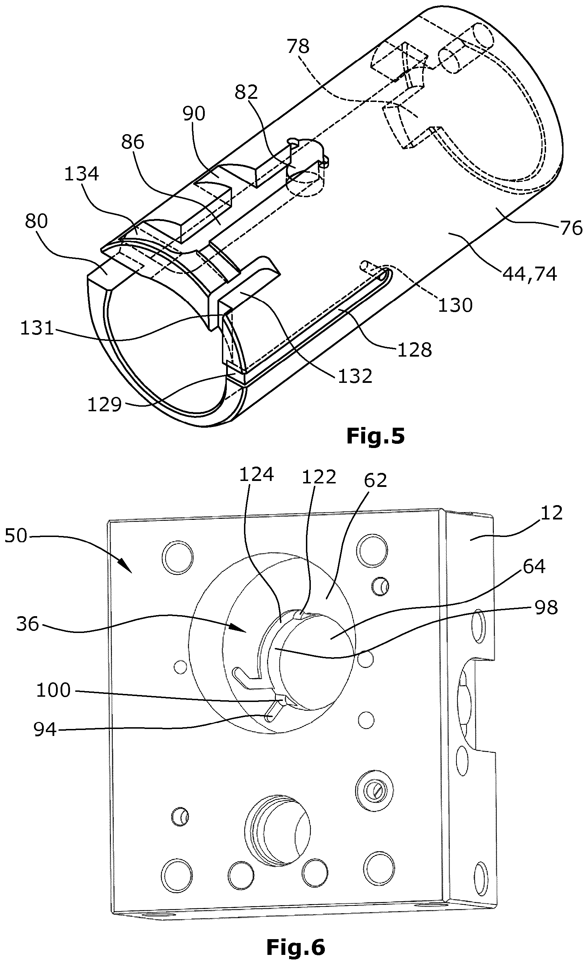

In der Figur 2 ist das Kolbengehäuse 16 dargestellt. Über den Einlass 20 strömt der Kraftstoff in einen Zulaufkanal 30, der sich durch das Kolbengehäuse 16 bis zu dessen stirnseitig begrenzenden Wand 32 erstreckt. In der Wand 32 sind mehrere weitere Kanäle eingefräst. Der Zulaufkanal 30 mündet zunächst in eine erste Einlassöffnung 34 des Verdrängerzählers 14, welche nierenförmig ausgebildet ist und in eine in den Figuren 4 und 6 zu erkennende Verdrängerkammer 36 des Verdrängerzählers 14 führt. Des Weiteren ist an der Wand 32 eine ebenfalls nierenförmige Auslassöffnung 38 aus der Verdrängerkammer 36 ausgebildet, die in einen Ablaufkanal 40 führt, der sich durch das Kolbengehäuse 16 erstreckt und im Auslass 22 mündet. Zusätzlich erstreckt sich vom Ende des Zulaufkanals 30 ein erster, als Zulauf 41 dienender Abschnitt einer Umgehungsleitung 42, der in eine Messkammer 44 des Druckdifferenzaufnehmers 18 führt. Ein zweiter als Ablauf 45 dienender Abschnitt der Umgehungsleitung 42 erstreckt sich von der im Vergleich zum ersten Abschnitt der Umgehungsleitung 42 entgegengesetzten Seite eines in der Messkammer 44 verschiebbar angeordneten Kolbens 46 aus der Messkammer 44 und mündet im Ablaufkanal 40. Der Kolben 46 weist das gleiche spezifische Gewicht wie das Messfluid auf und ist wie die Messkammer 44 zylindrisch geformt; die Messkammer 44 weist somit einen Innendurchmesser auf, der im Wesentlichen dem Außendurchmesser des Kolbens 46 entspricht. In Figur 3 ist der Kolben 46 lediglich zur besseren Unterscheidung von der Messkammer 44 kleiner dargestellt.

Zusätzlich ist an der stirnseitigen Wand 32 eine Axialnut 48 ausgebildet, die die im Kolbengehäuse 16 ausgebildeten Kanäle umgibt und die zur Aufnahme einer nicht dargestellten Dichtung dient, die gegen das Verdrängergehäuse 12 nach der Montage anliegt, so dass eine dichte Verbindung der beiden Gehäuseteile 12, 16 hergestellt wird.

In den Figuren 4 und 6 ist das Verdrängergehäuse 12 in einer Ansicht auf eine Anlagefläche 50 dargestellt, mit der das Verdrängergehäuse 12 gegen die die Verdrängerkammer 36 stirnseitig begrenzende Wand 32 des Kolbengehäuses 16 anliegt. Im Verdrängergehäuse 12 ist eine Aufnahmeöffnung 52 ausgebildet, in die eine Antriebswelle 54 der Antriebseinheit 24 des Verdrängerzählers 14 ragt. In diese Aufnahmeöffnung 52 wird eine Buchse 56 eingesetzt, die die Verdrängerkammer 36 radial begrenzt und entsprechend ein als antreibbares Verdrängerrad 58 dienendes Innenzahnrad sowie ein radial äußeres, innenverzahntes Außenzahnrad 60 des Verdrängerzählers 14 aufnimmt. Die im Wesentlichen topfförmig ausgeführte Buchse 56 weist entsprechend an ihrer rückseitig die Verdrängerkammer 36 begrenzenden Rückwand 62 eine Öffnung 64 auf, durch die die Antriebswelle 54 in die Verdrängerkammer 36 ragt.

An einer radial begrenzenden Außenwand 66 der Buchse 56 sind am Außenumfang zwei Nuten 68 und an der Rückwand 62 mit diesen Nuten 68 verbundene Bohrungen ausgebildet, über die der Zulaufkanal 30 beziehungsweise der Ablaufkanal 40 mit einer zweiten nierenförmigen Einlassöffnung 70 beziehungsweise zweiten nierenförmigen Auslassöffnung 72 des Verdrängerzählers 14 verbunden sind, so dass dieser von beiden Stirnseiten mit dem Messfluid versorgt wird.

Im Betrieb der Vorrichtung zur Messung von Durchflussvorgängen gelangt nun der als Messfluid dienende Kraftstoff über eine Hochdruckpumpe und ein oder mehrere Einspritzventile zum Einlass 20 und strömt weiter über den Zulaufkanal 30 zu den beiden Einlassöffnungen 34, 70 in die Verdrängerkammer 36, welche somit sowohl stirnseitig als auch rückseitig befüllt wird. Nach der Förderung durch die Drehung des angetriebenen Verdrängerrades 58 verlässt der Kraftstoff die Verdrängerkammer 36 wieder über die beiden Auslassöffnungen 38, 72 und strömt über den Ablaufkanal 40 zurück zum Auslass 22.

Durch die Förderung des Kraftstoffs mittels des Verdrängerzählers 14 sowie durch das Einspritzen des Kraftstoffs in den Einlass 20 und durch die fluidische Verbindung des Einlasses 20 zur Frontseite des Kolbens 46 sowie des Auslasses 22 zur Rückseite des Kolbens 46 über die Umgehungsleitung 42 kann eine Druckdifferenz zwischen der Frontseite und der Rückseite des Kolbens 46 entstehen, die zu einer Auslenkung des Kolbens 46 aus seiner Ruhestellung führt. Entsprechend ist die Auslenkung des Kolbens 46 ein Maß für die anliegende Druckdifferenz. An der Messkammer 44 ist daher ein Wegsensor angeordnet, der in Wirkverbindung mit dem Kolben 46 steht und in dem durch die Auslenkung des Kolbens 46 eine von der Größe der Auslenkung abhängige Spannung erzeugt wird. Dieser an der Messkammer 44 befestigte Wegsensor ist insbesondere ein magnetoresistiver Sensor, über den die auf ihn wirkende Feldstärke eines Magneten in eine Spannung umgewandelt wird. Als Wegsensoren können auch Lichtsensoren eingesetzt werden.
Der Wegsensor ist mit der Auswerte- und Steuereinheit 26 verbunden, welche die Werte dieses Wegsensors aufnimmt und entsprechende Steuersignale der Antriebseinheit 24 übermittelt, die möglichst derart angesteuert wird, dass sich der Kolben 46 immer in einer definierten Ausgangsstellung befindet. Der rotatorische Verdrängerzähler 14 wird also derart angetrieben, dass er die aufgrund des eingespritzten Fluides am Kolben 46 entstehende Druckdifferenz durch Förderung ständig etwa ausgleicht. In der Messkammer 44 sind des Weiteren ein Drucksensor sowie ein Temperatursensor angeordnet, die kontinuierlich die in diesem Bereich auftretenden Drücke und Temperaturen messen und wiederum der Auswerte- und Steuereinheit 26 zuführen, um Änderungen der Dichte bei der Berechnung berücksichtigen zu können.

Der Ablauf der Messungen erfolgt derart, dass bei der Berechnung eines zu ermittelnden Gesamtdurchflusses in der Auswerte- und Steuereinheit 26 sowohl ein durch die Bewegung beziehungsweise Stellung des Kolbens 46 und das damit verdrängte Volumen in der Messkammer 44 entstehender Durchfluss in der Umgehungsleitung 42 als auch ein tatsächlicher Durchfluss des Verdrängerzählers 14 in einem festgelegten Zeitintervall berücksichtigt werden und beide Durchflüsse zur Ermittlung des Gesamtdurchflusses miteinander addiert werden.

Die Ermittlung des Durchflusses am Kolben 46 erfolgt beispielsweise, indem in der Auswerte- und Steuereinheit 26, die mit dem Wegsensor verbunden ist, die Auslenkung des Kolbens 46 differenziert wird und anschließend mit der Grundfläche des Kolbens 46 multipliziert wird, so dass sich ein Volumenstrom in der Umgehungsleitung 42 in diesem Zeitintervall ergibt.

Der Durchfluss durch den Verdrängerzähler 14 kann entweder aus den ermittelten Steuerdaten bestimmt werden oder über die Drehzahl berechnet werden, wenn diese direkt am Verdrängerzähler 14 oder an der Antriebseinheit 24 beispielsweise über optische Kodierer oder magnetoresistive Sensoren gemessen wird.

Erfindungsgemäß sind der Zulaufkanal 30 und der Ablaufkanal 40, wie insbesondere in den Figuren 2 und 3 zu erkennen ist, schräg ausgebildet, so dass in Strömungsrichtung des Messfluids eine Steigung für zwei Einbaulagen vorliegt. Die erste mögliche Einbaulage beziehungsweise Betriebsstellung entspricht dabei jeweils der in den Figuren dargestellten Lage, während in der zweiten Betriebsstellung der Einlass und der Auslass nach oben zeigen. Diese schräge Ausführung hat zur Folge, dass Luftblasen im Kraftstoff immer vom Einlass zur Verdrängerkammer 36 und aus der Verdrängerkammer 36 in Richtung des Auslasses 22 gefördert werden und sich nicht in Toträumen festsetzen und ansammeln können, da die Luft aufgrund ihrer geringeren Dichte im Kraftstoff aufsteigt, auch ohne dass ein aktive Förderung vorliegt. Dies ist insbesondere bei Inbetriebnahme der Vorrichtung vorteilhaft, bei der eine Spülung der Vorrichtung vorgenommen werden muss, um zuverlässig die ansonsten die Messwerte verfälschende Luft aus allen Aggregaten und Leitungen der Vorrichtung zu entfernen.

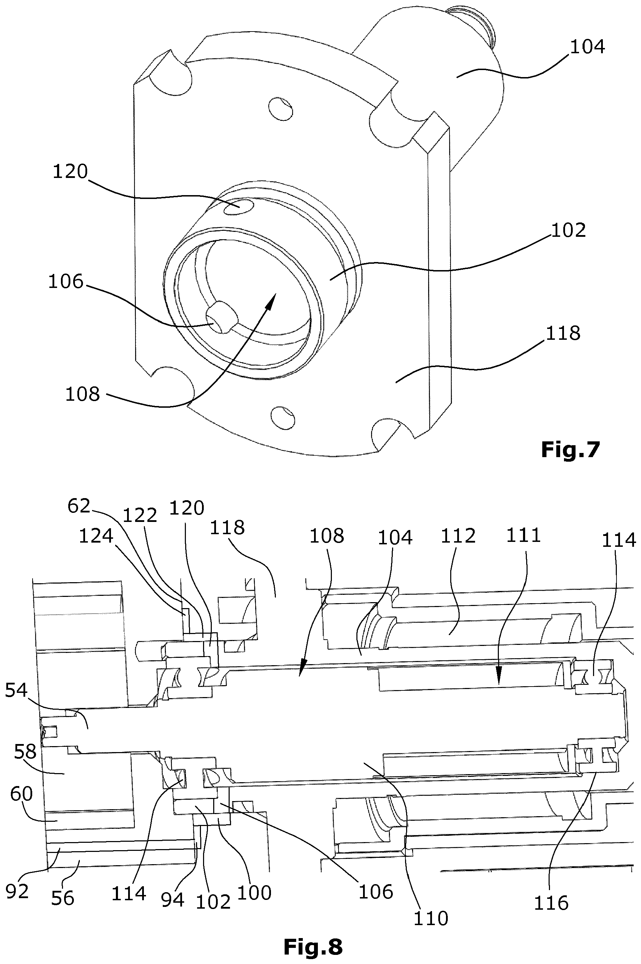

Hierzu wird zusätzlich eine besondere Ausführung der Messkammer 44 gewählt, wie sie insbesondere in Figur 5 zu erkennen ist. Der die Messkammer 44 bildende Hohlzylinder 74 weist Bohrungen und Fräsungen an, beziehungsweise in seiner radial begrenzenden Mantelfläche 76 auf, die als Kanäle dienen, wobei die Fräsungen durch das umgebende Kolbengehäuse 16 geschlossen werden, um die Kanäle zu bilden. An den gegenüberliegenden axialen Enden des Hohlzylinders 74 sind Öffnungen ausgebildet, wovon eine als Zulauföffnung 78 und die axial gegenüberliegende als Ablauföffnung 80 dient, wobei die Zulauföffnung 78 mit dem Zulauf 41 der Umgehungsleitung 42 verbunden ist und die Ablauföffnung 80 mit dem Ablauf 45 der Umgehungsleitung 42 verbunden ist. An der oberen Seite ist an der radial begrenzenden Mantelfläche 76 der Messkammer 44 eine erste Bypassöffnung 82 ausgebildet, welche einen axialen Abstand zum die Bewegung des Kolbens axial begrenzenden Anschlag 84 am ablaufseitigen Ende des Hohlzylinders 74 aufweist, der etwa der axialen Länge des Kolbens 46 entspricht, so dass diese Bypassöffnung 82 freigegeben wird, wenn der Kolben 46 gegen den Anschlag 84 anliegt, wie dies in Figur 4 dargestellt ist. Die Bypassöffnung 82 führt in einen sich axial erstreckenden Bypasskanal 86 und ist über ein an der Bypassöffnung 82 angeordnetes Rückschlagventil 88 verschließbar, über welches sichergestellt wird, dass das Messfluid ausschließlich aus der Messkammer 44 in den Bypasskanal 86 strömen kann, jedoch nicht in umgekehrter Richtung. Vom Bypasskanal 86 zweigt eine Spülleitung 90 ab, die sich von der Messkammer 44 zunächst durch das Kolbengehäuse 16 erstreckt, wie in der Figur 2 zu erkennen ist. Die Spülleitung 90 setzt sich im Verdrängergehäuse 12 in Form einer axialen Durchgangsbohrung 92 in der Buchse 56 fort, wie in Figur 4 dargestellt ist. Die Durchgangsbohrung 92 mündet in einer Nut 94 an der Rückwand 62 des Verdrängergehäuses 12. In dieser Rückwand 62 ist die Öffnung 64 ausgebildet, an der die Antriebseinheit 24 angesetzt wird. In Figur 6 ist zu erkennen, dass an der die Öffnung 64 radial begrenzenden Wand 98 eine Ausnehmung 100 ausgebildet ist, die die Nut 94 in axialer Richtung verlängert. An der radial begrenzenden Wand 98 liegt radial innen ein Kragen 102 eines in Figur 7 dargestellten Spalttopfes 104 der Antriebseinheit 24 an, an dem im unteren Bereich eine Zuflussöffnung 106 in Form einer Bohrung ausgebildet ist, die in eine im Innern des Spalttopfes 104 ausgebildete Rotorkammer 108 führt, wobei diese Zuflussöffnung 106 unmittelbar benachbart zur Ausnehmung 100 ausgebildet ist, so dass die Spülleitung 90 in den unteren Bereich der Rotorkammer 108 führt.

In der Rotorkammer 108 ist ein Permanentmagnete tragender Rotor 110 eines als Spalttopfmotor 111 ausgebildeten Elektromotors angeordnet, der auf der Antriebswelle 54 befestigt ist und in bekannter Weise mit einem radial außerhalb des Spalttopfes 104 angeordneten und den Rotor 110 umgebenden Stator 112 korrespondiert und entsprechend der Bestromung des Stators 112 angetrieben wird. Der Spalttopf 104 trennt dabei die Rotorkammer 108 dichtend nach außen in Richtung des Stators 112 ab. Entsprechend sind auch die beiden Lager 114 zur Lagerung der Antriebswelle 54 innerhalb des Kragens 102 des Spalttopfes 104 beziehungsweise an der axial gegenüberliegenden Seite in einer Lageraufnahme 116 des Spalttopfes 104 angeordnet. Über eine Flanschplatte 118, die sich unmittelbar angrenzend zum in die Öffnung 64 ragenden Kragen 102 radial erstreckt, wird der Spalttopf 104 und mit ihm der als Spalttopfmotor 111 ausgebildete Elektromotor am Verdrängergehäuse 12 befestigt.

An der oberen Seite des Kragens 102 des Spalttopfes 104 ist eine aus der Rotorkammer 108 nach radial außen führende Abflussöffnung 120 ausgebildet, die wiederum in eine weitere Ausnehmung 122 an der die Öffnung 64 radial begrenzenden Wand 98 des Verdrängergehäuses 12 mündet. Eine teilweise um die Öffnung 64 verlaufende Nut 124 verlängert diese Ausnehmung 122 bis vor eine Axialbohrung 126 in der Buchse 56, die in der Nut 68 der Buchse 56 mündet, welche mit dem Ablaufkanal 40 fluidisch verbunden ist. Entsprechend besteht eine fluidische Verbindung der Spülleitung 90 mit dem Auslass 22 der Vorrichtung über die Rotorkammer 108. Eine direkte Verbindung dieses Bypasskanals 86 zur Ablauföffnung 80 besteht nicht. Entsprechend entsteht eine Zwangsdurchströmung der Rotorkammer 108 im Fall der geöffneten ersten Bypassöffnung 82.

Entsprechend wird bei Inbetriebnahme das Messfluid über den Einlass bei nicht betätigtem Verdrängerzähler 14 in den Zulaufkanal 30 gefördert. Hierdurch entsteht eine Druckdifferenz über den Kolben 46, so dass dieser so weit verschoben wird, dass die Bypassöffnung 82 freigegeben wird und ein Spülstrom über die Spülleitung 90 und die Rotorkammer 108 zum Auslass 22 gelangt. Da die Bauteile, in denen sich Luftblasen sammeln könnten, die jeweiligen Einlassöffnungen 78, 106 im unteren Bereich und die entsprechenden Auslassöffnungen 80, 120 im oberen Bereich aufweisen, wird sichergestellt, dass die im System vorhandene Luft aus diesen Kammern 44, 108 vollständig entfernt wird. Nach anschließendem Einschalten des Verdrängerzählers 14 wird zusätzlich die gegebenenfalls in der Verdrängerkammer 36 noch vorhandene Luft über den schrägen Ablaufkanal 40 zuverlässig abgeführt, so dass das System vollständig von Luft befreit wird.

Für die zweite Betriebsstellung der Vorrichtung, bei der Einlass 20 und Auslass 22 nach oben weisen, ist an der radial begrenzenden Mantelfläche 76 der Messkammer 44 ein zum Einlass 20 beziehungsweise Auslass 22 weisender zweiter Bypasskanal 128 über eine zweite Bypassöffnung 130 mit der Messkammer 44 verbunden. Auch diese Bypassöffnung 130 wird freigegeben, wenn der Kolben 46 am ablaufseitigen Ende am Anschlag 84 anliegt. Der Bypasskanal 128 erstreckt sich von der Bypassöffnung 130 axial zum ablaufseitigen axialen Ende der Messkammer 44 und weist zu diesem Ende eine Nut 129 auf, so dass eine fluidische Verbindung zur Ablauföffnung 80 besteht. Des Weiteren ist dieses ablaufseitige Ende mit einer weiteren Nut 131 versehen, die zu einer im Kolbengehäuse 16 ausgebildeten, als Bypassablaufkanal 132 dienenden Bohrung führt, über die das ablaufseitige Ende der Messkammer 44 direkt mit dem Ablaufkanal 40 der Vorrichtung verbunden ist. Bei der Auslegung ist darauf zu achten, dass der zweite Bypasskanal 128 deutlich kleiner ausgeführt ist als die Spülleitung 90, so dass in beiden Einbaulagen sichergestellt ist, dass eine Spülung der Rotorkammer 108 erfolgt. Entsprechend wird in der zweiten Einbaulage die Luft aus der Messkammer 44 vor allem über den zweiten Bypasskanal 128 in Richtung Auslass 22 gedrängt und zwar sowohl über den Bypassablaufkanal 132 als auch über den Ablauf 45 der Umgehungsleitung 42.

Für den Fall, dass der Druck in der Spülleitung 90 zu weit steigt, was insbesondere bei Blockieren des Verdrängerzählers auftreten kann, zweigt vom ersten Bypasskanal 86 in Strömungsrichtung stromabwärtig zur Spülleitung 90 eine Notlaufleitung 134 ab. In dieser Notlaufleitung 134 ist ein Druckbegrenzungsventil 136 angeordnet, welches bei Überschreiten eines Druckes von beispielsweise etwa 0,4 bar öffnet. Bei Überschreiten dieses Druckes kann das Messfluid über die durch das Kolbengehäuse 16 zum Ablauf 45 der Umgehungsleitung 42 geführte Notlaufleitung 134 zum Auslass 22 abgeführt werden, so dass eine Schädigung der Vorrichtung verhindert wird.

Die beschriebene erfindungsgemäße Vorrichtung zur Messung von Durchflussvorgängen kann somit in zwei verschiedenen Einbaulagen beziehungsweise Betriebsstellungen zuverlässig und vollständig von Luft befreit werden, welche die Messergebnisse aufgrund der Kompressibilität der Luft verfälschen würde, sobald sich eine Luftblase im Betrieb aus der Rotorkammer der Messkammer oder der Verdrängerkammer lösen würde. Auch eine Ansammlung von Luft in den Kanälen wird durch deren Lage zueinander zuverlässig vermieden. Entsprechend werden verbesserte Messwerte erreicht. Zusätzlich wird eine Schädigung des Gerätes bei auftretenden Druckspitzen vermieden, wie sie insbesondere bei Blockieren oder sonstigen Ausfall des Verdrängerzählers auftreten können. Diese Vorteile werden erzielt, ohne dass zusätzliche Leitungen für eine Spülung montiert werden müssen. Entsprechend bleiben der Aufbau und die Montage der erfindungsgemäßen Vorrichtung kostengünstig.

Es sollte deutlich sein, dass die Erfindung nicht auf das beschriebene Ausführungsbeispiel begrenzt ist, sondern verschiedene Modifikationen innerhalb des Schutzbereichs des Hauptanspruchs möglich sind. So lässt sich die Anordnung der Kanäle und der Gehäuseteilungen ebenso ändern wie die Ausführung des Verdrängerzählers, der beispielsweise auch als Doppelzahnradpumpe oder Flügelzellenpumpe ausgeführt werden kann. Auch kann statt der Buchse der Verdrängerzähler direkt in der Ausnehmung angeordnet werden oder die Buchse ohne eigene Rückwand ausgeführt werden und entsprechend die Kanäle im Verdrängergehäuse selbst ausgebildet werden. Statt des beschriebenen Spalttopfmotors ist es auch möglich, eine Magnetkupplung in der Rotorkammer zu verwenden, bei der der Innenrotor im Spalttopf angeordnet wird und der Außenrotor, der durch einen Elektromotor angetrieben wird radial außerhalb des Stators angeordnet wird. Weitere konstruktive Änderungen innerhalb des Schutzbereiches des Hauptanspruchs sind ebenfalls denkbar.

## Patentansprüche

1. Vorrichtung zur Messung von Durchflussvorgängen von Fluiden mit einem Einlass (20),
einem Auslass (22),
einem über eine Antriebseinheit (24) antreibbaren Verdrängerzähler (14), dessen Verdrängerkammer (36) über einen Zulaufkanal (30) mit dem Einlass (20) und über einen Ablaufkanal (40) mit dem Auslass (22) fluidisch verbunden ist,
einer Umgehungsleitung (42), über die der Verdrängerzähler (14) umgehbar ist,
einem Druckdifferenzaufnehmer (18), der in der Umgehungsleitung (42) angeordnet ist,
und einer Auswerte- und Steuereinheit (26), über die der antreibbare Verdrängerzähler (14) in Abhängigkeit der am Druckdifferenzaufnehmer (18) anliegenden Druckdifferenz regelbar ist,
**dadurch gekennzeichnet, dass**
der Zulaufkanal (30) und der Ablaufkanal (40) in Strömungsrichtung des Fluids steigend ausgebildet sind.

2. Vorrichtung zur Messung von Durchflussvorgängen von Fluiden nach Anspruch 1,
**dadurch gekennzeichnet, dass**
am Druckdifferenzaufnehmer (18) ein Bypasskanal (86) ausgebildet ist, der sich vom Innern einer Messkammer (44) des Druckdifferenzaufnehmers (18) in eine Spülleitung (90) erstreckt, die in einer Rotorkammer (108) der Antriebseinheit (24) mündet.

3. Vorrichtung zur Messung von Durchflussvorgängen von Fluiden nach Anspruch 2,
**dadurch gekennzeichnet, dass**
an der Rotorkammer (108) im geodätisch unteren Bereich eine Zuflussöffnung (106) ausgebildet ist, in die die Spülleitung (90) mündet und im geodätisch oberen Bereich eine Abflussöffnung (120) ausgebildet ist, die fluidisch mit dem Auslass (22) verbunden ist.

4. Vorrichtung zur Messung von Durchflussvorgängen von Fluiden nach einem der Ansprüche 2 oder 3,
**dadurch gekennzeichnet, dass**
im Innern der Messkammer (44) ein Kolben (46) axial verschieblich angeordnet ist, über den eine Bypassöffnung (82) aus der Messkammer (44) zum Bypasskanal (86) verschließbar oder freigebbar ist, wobei die Bypassöffnung (82) durch den Kolben (46) freigegeben und damit eine fluidische Verbindung zwischen einer Zulauföffnung (78) in die Messkammer (44) und dem Bypasskanal (86) hergestellt ist, wenn der Kolben (46) abströmseitig an einem die Kolbenbewegung axial begrenzenden, ablaufseitigen Anschlag (84) anliegt.

5. Vorrichtung zur Messung von Durchflussvorgängen von Fluiden nach Anspruch 4,
**dadurch gekennzeichnet, dass**
die Messkammer (44) durch einen Hohlzylinder (74) begrenzt ist, an dessen gegenüberliegenden axialen Enden der radial begrenzenden Mantelfläche (76) die Zulauföffnung (78) und eine Ablauföffnung (80) ausgebildet sind, die an den entgegengesetzten Enden des Druckdifferenzaufnehmers (18) in die Umgehungsleitung (42) münden, wobei an der Mantelfläche (76) die Bypassöffnung (82) ausgebildet ist und in dem Bypasskanal (86) ein Rückschlagventil (88) angeordnet ist.

6. Vorrichtung zur Messung von Durchflussvorgängen von Fluiden nach einem der Ansprüche 2 bis 5,
**dadurch gekennzeichnet, dass**
sich die Spülleitung (90) vom Bypasskanal (86) durch ein Kolbengehäuse (16), in dem der Druckdifferenzaufnehmer (18) angeordnet ist und durch ein Verdrängergehäuse (12), in dem der Verdrängerzähler (14) angeordnet ist, zu der Zuflussöffnung (106) der Rotorkammer (108) erstreckt.

7. Vorrichtung zur Messung von Durchflussvorgängen von Fluiden nach Anspruch 6,
**dadurch gekennzeichnet, dass**
die Verdrängerkammer (36) in einer Buchse (56) ausgebildet ist, die in einer Aufnahmeöffnung (52) des Verdrängergehäuses (12) angeordnet ist, wobei sich ein Abschnitt der Spülleitung (90), der sich durch das Verdrängergehäuse (12) erstreckt, durch eine Bohrung (92) in der Buchse (56) gebildet ist.

8. Vorrichtung zur Messung von Durchflussvorgängen von Fluiden nach einem der vorhergehenden Ansprüche 4 bis 7,
**dadurch gekennzeichnet, dass**
die Spülleitung (90) stromabwärts des Rückschlagventils (88) vom Bypasskanal (86) abzweigt.

9. Vorrichtung zur Messung von Durchflussvorgängen von Fluiden nach einem der Ansprüche 3 bis 8,
**dadurch gekennzeichnet, dass**
sich die Spülleitung (90) von der Abflussöffnung (120) der Rotorkammer (108) durch das Verdrängergehäuse (12) und das Kolbengehäuse (16) zum Auslass (22) erstreckt.

10. Vorrichtung zur Messung von Durchflussvorgängen von Fluiden nach einem der Ansprüche 4 bis 9,
**dadurch gekennzeichnet, dass**
die Bypassöffnung (82) in einer ersten Betriebsstellung der Vorrichtung an einem geodätisch höchsten Punkt der Messkammer (44) ausgebildet ist.

11. Vorrichtung zur Messung von Durchflussvorgängen von Fluiden nach einem der Ansprüche 5 bis 10,
**dadurch gekennzeichnet, dass**
der erste Bypasskanal (86) ausschließlich über die Rotorkammer (108) fluidisch mit der Ablauföffnung (80) der Messkammer (44) verbunden ist.

12. Vorrichtung zur Messung von Durchflussvorgängen von Fluiden nach einem der Ansprüche 2 bis 10,
**dadurch gekennzeichnet, dass**
die Rotorkammer (108) radial durch einen Spalttopf (104) begrenzt ist.

13. Vorrichtung zur Messung von Durchflussvorgängen von Fluiden nach Anspruch 12,
**dadurch gekennzeichnet, dass**
der Spalttopf (104) einen innenliegenden Rotor (110) von einem außenliegenden Stator (112) eines Spalttopfmotors (111) trennt.

14. Vorrichtung zur Messung von Durchflussvorgängen von Fluiden nach Anspruch 12,
**dadurch gekennzeichnet, dass**
der Spalttopf (104) einen innenliegenden Rotor von einem außenliegenden magnetischen Rotor einer Magnetkupplung trennt.

15. Vorrichtung zur Messung von Durchflussvorgängen von Fluiden nach einem der Ansprüche 5 bis 14,
**dadurch gekennzeichnet, dass**
an der Messkammer (44) eine zum Einlass (20) und Auslass (22) weisende zweite Bypassöffnung (130) ausgebildet ist, die in einen zweiten Bypasskanal (128) mündet, der ablaufseitig in die Messkammer (44) mündet.

16. Vorrichtung zur Messung von Durchflussvorgängen von Fluiden nach Anspruch 15,
**dadurch gekennzeichnet, dass**
ablaufseitig an der Messkammer (44) ein Bypassablaufkanal (132) ausgebildet ist, der sich aus der Messkammer (44) durch das Kolbengehäuse (16) in den Ablaufkanal (40) erstreckt.

17. Vorrichtung zur Messung von Durchflussvorgängen von Fluiden nach einem der Ansprüche 15 oder 16,
**dadurch gekennzeichnet, dass**
die zweite Bypassöffnung (130) kleiner ist als die erste Bypassöffnung (82).

18. Vorrichtung zur Messung von Durchflussvorgängen von Fluiden nach einem der Ansprüche 2 bis 16,
**dadurch gekennzeichnet, dass**
vom ersten Bypasskanal (86) eine Notlaufleitung (134) abzweigt, die entweder direkt oder über einen Ablauf (45) der Umgehungsleitung (42) in den Ablaufkanal (40) mündet.

19. Vorrichtung zur Messung von Durchflussvorgängen von Fluiden nach Anspruch 18,
**dadurch gekennzeichnet, dass**
in der Notlaufleitung (134) ein Druckbegrenzungsventil (136) angeordnet ist.

20. Vorrichtung zur Messung von Durchflussvorgängen von Fluiden nach einem der Ansprüche 18 oder 19,
**dadurch gekennzeichnet, dass**
die Notlaufleitung (134) stromabwärts der Spülleitung (90) vom ersten Bypasskanal (86) abzweigt.

## Claims

1. Device for measuring flow processes of fluids, comprising
an inlet (20),
an outlet (22),
a positive displacement flow meter (14) which is driven by a drive unit (24) and the positive displacement chamber (36) of which is fluidically connected to the inlet (20) via a supply duct (30) and to the outlet (22) via a discharge duct (40),
a bypass (42) that allows the positive displacement flow meter (14) to be bypassed,
a differential pressure sensor (18) which is placed in the bypass (42),
and an evaluation and control unit (26) that allows the drivable positive displacement flow meter (14) to be controlled in accordance with the differential pressure applied to the differential pressure sensor (18),
**characterized in that**
the supply duct (30) and the discharge duct (40) are designed to rise in the direction in which the fluid flows.

2. Device for measuring flow processes of fluids of claim 1, **characterized in that** a bypass duct (86) is formed at the differential pressure sensor (18), which duct extends from the interior of a measuring chamber (44) of the differential pressure sensor (18) into a flushing line (90) that opens into a rotor chamber (108) of the drive unit (24).

3. Device for measuring flow processes of fluids of claim 2, **characterized in that** an inflow port (106) is formed at the rotor chamber (108) in the geodetically lower region, into which port the flushing line (90) opens, and an outflow port (120) is formed in the geodetically upper region, which port is fluidically connected with the outlet (22).

4. Device for measuring flow processes of fluids of one of claims 2 or 3, **characterized in that** a piston (46) is arranged inside the measuring chamber (44) such that it is axially displaceable, by which a bypass port (82) from the measuring chamber (44) to the bypass duct (86) is closeable or clearable, wherein the bypass port (82) is cleared by the piston (46) and a fluidic connection is thereby established between a supply port (78) into the measuring chamber (44) and the bypass duct (86) when the piston (46) rests, on the outflow side, on a discharge-side stop (84) that delimits the piston movement in the axial direction.

5. Device for measuring flow processes of fluids of claim 4, **characterized in that** the measuring chamber (44) is delimited by a hollow cylinder (74) at the opposite axial ends of the radially delimiting shell surface (76) thereof the supply port (78) and a discharge port (80) are formed, which open into the bypass (42) at the opposite axial ends of the differential pressure sensor (18), wherein the bypass port (82) is formed at the shell surface (76) and a check valve (88) is arranged in the bypass duct (86).

6. Device for measuring flow processes of fluids of one of claims 2 to 5, **characterized in that** the flushing line (90) extends from bypass duct (86) through a piston housing (16), in which the differential pressure sensor (18) is arranged, and through a positive displacement housing (12), in which the positive displacement flow meter (14) is arranged, to the inflow port (106) of the rotor chamber (108).

7. Device for measuring flow processes of fluids of claim 6, **characterized in that** the positive displacement chamber (36) is formed in a sleeve (62) which is arranged in a receiving opening (52) of the positive displacement housing (12), wherein a section of the flushing line (90) that extends through the positive displacement housing (12) is formed by a bore (92) in the sleeve (56).

8. Device for measuring flow processes of fluids of one of claims 4 to 7, **characterized in that** the flushing line (90) branches from the bypass duct (86) downstream of the check valve (88).

9. Device for measuring flow processes of fluids of one of claims 3 to 8, **characterized in that** the flushing line (90) extends from the outflow port (120) of the rotor chamber (108) through the positive displacement housing (12) and the piston housing (16) to the outlet (22).

10. Device for measuring flow processes of fluids of one of claims 4 to 9, **characterized in that**, in a first operating position of the device, the bypass port (82) is formed at a geodetically highest point of the measuring chamber (44).

11. Device for measuring flow processes of fluids of one of claims 5 to 10, **characterized in that** the first bypass duct (86) is fluidically connected with the discharge port (80) of the measuring chamber (44) exclusively via the rotor chamber (108).

12. Device for measuring flow processes of fluids of one of claims 2 to 10, **characterized in that** the rotor chamber (108) is radially delimited by a can (104).

13. Device for measuring flow processes of fluids of claim 12, **characterized in that** the can (104) separates an inner rotor (110) from an outer stator (112) of a canned motor (111).

14. Device for measuring flow processes of fluids of claim 12, **characterized in that** the can (104) separates an inner rotor from an outer magnetic rotor of a magnetic clutch.

15. Device for measuring flow processes of fluids of one of claims 5 to 14, **characterized in that** a second bypass port (130) oriented towards the inlet (20) and the outlet (22) is formed at the measuring chamber (44), the port opening into a second bypass duct (128) which opens into the measuring chamber (44) on the discharge side.

16. Device for measuring flow processes of fluids of claim 15, **characterized in that** a bypass discharge duct (132) is formed at the measuring chamber (44) on the discharge side, the duct extending from the measuring chamber (44) through the piston housing (16) into the discharge duct (40).

17. Device for measuring flow processes of fluids of one of claims 15 or 16, **characterized in that** the second bypass port (130) is smaller than the first bypass port (82).

18. Device for measuring flow processes of fluids of one of claims 2 to 16, **characterized in that** an emergency operation line (134) branches from the first bypass duct (86) which opens into the discharge duct (40) either directly or via a discharge (45) of the bypass (42).

19. Device for measuring flow processes of fluids of claim 18, **characterized in that** a pressure limiting valve (136) is arranged in the emergency operation line (134).

20. Device for measuring flow processes of fluids of one of claims 18 or 19, **characterized in that** the emergency operation line (134) branches from the first bypass duct (86) downstream of the flushing line (90).

## Revendications

1. Dispositif de mesure des processus d'écoulement de fluides comprenant
une entrée (20),
une sortie (22),
un compteur de déplacement (14) pouvant être entraîné par une unité d'entraînement (24), dont la chambre de déplacement (36) est reliée fluidiquement à l'entrée (20) à travers un canal d'arrivée (30) et à la sortie (22) à travers un passage de fluide (40),
une conduite de dérivation (42) par laquelle le compteur de déplacement positif (14) peut être contourné,
un capteur de différence de pression (18) agencé dans la conduite de dérivation (42),
et une unité d'évaluation et de commande (26) par laquelle le compteur de déplacement (14) entraînable peut être réglée en fonction de la différence de pression présente au capteur de différence de pression (18),
**caractérisé en ce que**
le canal d'arrivée (30) et le canal de sortie (40) montent dans la direction d'écoulement du fluide.

2. Dispositif de mesure de processus d'écoulement de fluides selon la revendication 1, **caractérisé en ce qu'**un canal de dérivation (86) est formé au capteur de différence de pression (18), s'étendant depuis l'intérieur d'une chambre de mesure (44) du capteur de pression différentielle (18) dans une conduite de rinçage (90) s'ouvrant dans une chambre de rotor (108) de l'unité d'entraînement (24).

3. Dispositif de mesure de processus d'écoulement de fluides selon la revendication 2, **caractérisé en ce que**, dans la région géodésiquement inférieure, une ouverture d'entrée (106) est formée sur la chambre de rotor (108) dans laquelle s'ouvre la conduite de rinçage (90), et, dans la région géodésiquement supérieure, une ouverture de sortie (120) est formée, qui est connecté fluidiquement à la sortie (22).

4. Dispositif de mesure de processus d'écoulement de fluides selon l'une des revendications 2 ou 3, **caractérisé en ce qu'**un piston (46) pouvant être déplacé axialement est disposé dans l'intérieur de la chambre de mesure (44), par lequel piston une ouverture de dérivation (82) venant de la chambre de mesure (44) vers le passage de dérivation (86) peut être fermée ou libérée, l'ouverture de dérivation (82) étant libérée par le piston (46) et une liaison fluidique entre une ouverture d'arrivée (78) dans la chambre de mesure (44) et le canal de dérivation (86) étant alors établie, lorsque le piston (46) repose, côté d'écoulement, sur une butée (84), côté drain, limitant le mouvement du piston dans la direction axiale.

5. Dispositif de mesure de flux de fluides selon la revendication 4, **caractérisé en ce que** la chambre de mesure (44) est limitée par un cylindre creux (74), l'ouverture d'arrivée (78) et une ouverture de drain (80) étant formées aux extrémités axiales opposées de la surface (76) latérale délimitant radialement dudit cylindre, lesdites ouvertures s'ouvrant aux extrémités opposées du capteur de différence de pression (18) dans la conduite de dérivation (42), l'ouverture de dérivation (82) étant formée dans la surface (76) latérale et un clapet anti-retour (88) est disposé dans le canal de dérivation (86).

6. Dispositif de mesure de processus d'écoulement de fluides selon l'une des revendications 2 à 5, **caractérisé en ce que** la conduite de rinçage (90) s'étend du canal de dérivation (86) à travers un boîtier de piston (16), dans lequel le capteur de différence de pression (18) est agencé, et à travers un boitier déplaceur (12), dans lequel est agencé le compteur de déplacement (14), jusqu'à l'ouverture d'arrivée (106) de la chambre de rotor (108).

7. Dispositif de dosage de débit de fluide selon la revendication 6, **caractérisé en ce que** la chambre de déplacement (36) est formée dans une douille (56) disposée dans une ouverture de réception (52) du boîtier déplaceur (12), une section du conduit de rinçage (90) qui s'étend à travers le boîtier déplaceur (12) étant formée par un alésage (92) dans la douille (56).

8. Dispositif de mesure de processus d'écoulement de fluides selon l'une des revendications précédentes 4 à 7, **caractérisé en ce que** la conduite de rinçage (90) est dérivée du canal de dérivation (86) en aval du clapet anti-retour (88).

9. Dispositif de mesure de processus d'écoulement de fluides selon l'une des revendications 3 à 8, **caractérisé en ce que** la conduite de rinçage (90) s'étend de l'ouverture de sortie (120) de la chambre de rotor (108) à travers le boitier déplaceur (12) et le boitier du piston (16).

10. Dispositif de mesure de processus d'écoulement de fluides selon l'une des revendications 4 à 9, **caractérisé en ce que**, dans une première position de fonctionnement du dispositif, l'ouverture de dérivation (82) est formée à un point géodésique le plus haut de la chambre de mesure (44).

11. Dispositif de mesure de processus d'écoulement de fluides selon l'une des revendications 5 à 10, **caractérisé en ce que** le premier canal de dérivation (86) est en liaison fluidique avec l'ouverture de drain (80) de la chambre de mesure (44) exclusivement par l'intermédiaire de la chambre de rotor (108).

12. Dispositif de mesure de processus d'écoulement de fluides selon l'une des revendications 2 à 10, **caractérisé en ce que** la chambre de rotor (108) est limitée radialement par un pot d'entrefer (104).

13. Dispositif de mesure de processus d'écoulement de fluides selon la revendication 12, **caractérisé en ce que** le pot d'entrefer (104) sépare un rotor interne (110) d'un stator externe (112) d'un moteur à pot d'entrefer (111).

14. Dispositif de mesure de processus d'écoulement de fluides selon la revendication 12, **caractérisé en ce que** le pot d'entrefer (104) sépare un rotor interne d'un rotor magnétique externe d'un couplage magnétique.

15. Dispositif de mesure de processus d'écoulement de fluides selon l'une des revendications 5 à 14, **caractérisé en ce qu'**une deuxième ouverture de dérivation (130) est formée dans la chambre de mesure (44) faisant face à l'entrée (20) et la sortie (22), ladite ouverture s'ouvrant dans un deuxième canal de dérivation (128) qui s'ouvre, côté sortie, dans la chambre de mesure (44).

16. Dispositif de mesure de processus d'écoulement de fluides selon la revendication 15, **caractérisé en ce qu'**un canal de sortie de dérivation (132) est formé, côté sortie, dans la chambre de mesure (44), ledit canal s'étendant de la chambre de mesure (44) à travers le boîtier de piston (16) dans le canal de sortie (40).

17. Dispositif de mesure de processus d'écoulement de fluides selon l'une des revendications 15 ou 16, **caractérisé en ce que** la deuxième ouverture de dérivation (130) est plus petite que la première ouverture de dérivation (82).

18. Dispositif de mesure de processus d'écoulement de fluides selon l'une des revendications 2 à 16, **caractérisé en ce qu'**une conduite de secours (134) se branche du premier canal de dérivation (86), soit directement, soit par un drain (45) de la conduite de dérivation (42), s'ouvrant dans le canal d'écoulement(40).

19. Dispositif de mesure de processus d'écoulement de fluides selon la revendication 18, **caractérisé en ce qu'**une vanne de limitation de pression (136) est disposée dans la conduite de secours (134).

20. Dispositif de mesure de processus d'écoulement de fluides selon l'une des revendications 18 ou 19, **caractérisé en ce que** la conduite de secours (134) est dérivée du premier canal de dérivation (86) en aval de la conduite de rinçage (90).
